# EUROPEAN PATENT SPECIFICATION

(11) **EP 3 319 457 B1**
(45) Date of publication and mention of the grant of the patent: **19.11.2025**
(21) Application number: 16736213.6
(22) Date of filing: 08.07.2016
(51) Int. Cl.: A23K 20/163, A23L 29/231, A23L 33/00, A23K 50/30, A23K 50/50, A23K 50/60, A23L 33/105

(54) **METHOD FOR MODIFYING THE FEED INTAKE PATERN**
VERFAHREN ZUR ÄNDERUNG DES FUTTERAUFNAHMEPATERNS
MÉTHODE DE MODIFICATION DU MODÈLE DE L'INGESTION DE LA NOURRITURE

(30) Priority: 10.07.2015 EP 15176281
(43) Date of publication of application: 16.05.2018
(73) Proprietor: Nutrition Sciences N.V., 9031 Drongen (BE)
(72) Inventor: BRUGGEMAN, Geert, 8200 Brugge (BE); BRUININX, Erik, 7302 HA Apeldoorn (NL); VAN DEN BERG, Marco, 2613 AX Delft (NL); DE VOS, Paulus, 9713 GZ Groningen (NL); SAHASRABUDHE, Neha Mohan, 9713 GZ Groningen (NL); SCHEURINK, Antonius Johannes Willibrordus, 9712 CP Groningen (NL); SCHOLS, Hendrik Arie, 6708 PB Wageningen (NL); SCHOLTE, Jan, 9321 XL Peize (NL); TIAN, Lingmin, 6708 PB Wageningen (NL)
(74) Representative: Brantsandpatents bv
(86) International application number: PCT/EP2016/066354
(87) International publication number: WO 2017/009259

(56) References cited:
- EP-A1- 1 410 722
- EP-A1- 1 588 629
- WO-A1-2010/115890
- WO-A1-2013/151082
- WO-A1-2014/005853
- WO-A1-97/49298
- WO-A2-2010/129153
- JP-A- 2011 042 604
- JP-A- 2011 055 747
- JP-B2- 3 165 743
- US-A1- 2003 118 712
- US-A1- 2007 275 118
- US-A1- 2008 166 465
- ANONYMUS: "Pectin LM Datasheet", 1 January 2009 (2009-01-01), XP055657963, Retrieved from the Internet <URL:https://www.ulprospector.com/documents/1212396.pdf?bs=12785&b=350405&st=1&sl=85471818&crit=a2V5d29yZDpbcGVjdGluIExNXSA%2bIEFkZGl0aXZlcw%3d%3d&k=pectin|LM&r=eu&ind=food> [retrieved on 20200114]
- ANONYMUS: "GRINDSTED Pectin FB 220", 6 November 2009 (2009-11-06), XP055657966, Retrieved from the Internet <URL:https://www.ulprospector.com/documents/1024612.pdf?bs=1534&b=111422&st=1&sl=85471991&crit=SW5ncmVkaWVudHMgPiBrZXl3b3JkOltQZWN0aW5d&r=eu&ind=food> [retrieved on 20200114]
- DATABASE MEDLINE [online] US NATIONAL LIBRARY OF MEDICINE (NLM), BETHESDA, MD, US; May 1990 (1990-05-01), DROCHNER W ET AL: "[The effect of increasing additions of low-esterified pectins in the diet on the metabolism of laying hens--tested by pair-feeding studies].", XP002745372, Database accession no. NLM2241569
- DROCHNER W ET AL: "[The effect of increasing additions of low-esterified pectins in the diet on the metabolism of laying hens--tested by pair-feeding studies].", ARCHIV FUR TIERERNAHRUNG, vol. 40, no. 5-6, May 1990 (1990-05-01), pages 431 - 442, XP009186424, ISSN: 0003-942X, DOI: 10.1080/17450399009421074
- DI LORENZO C ET AL: "PECTIN DELAYS GASTRIC EMPTYING AND INCREASES SATIETY IN OBESE SUBJECTS", GASTROENTEROLOGY, ELSEVIER INC, US, vol. 95, no. 5, 1 January 1988 (1988-01-01), pages 1211 - 1215, XP009073593, ISSN: 0016-5085
- D. J. LANGHOUT ET AL: "Nutritional Implications of Pectins in Chicks in Relation to Esterification and Origin of Pectins", POULTRY SCIENCE, vol. 75, no. 10, 1 October 1996 (1996-10-01), pages 1236 - 1242, XP055218036, ISSN: 0032-5791, DOI: 10.3382/ps.0751236
- KIRSTYN LOGAN ET AL: "Correlating the structure and in vitro digestion viscosities of different pectin fibers to in vivo human satiety", FOOD & FUNCTION, vol. 6, no. 1, 1 January 2015 (2015-01-01), pages 62 - 70, XP055218031, ISSN: 2042-6496, DOI: 10.1039/C4FO00543K
- DATABASE MEDLINE [online] US NATIONAL LIBRARY OF MEDICINE (NLM), BETHESDA, MD, US; May 1990 (1990-05-01), DROCHNER W ET AL: "[The effect of increasing additions of low-esterified pectins in the diet on the metabolism of laying hens--tested by pair-feeding studies].", XP002745372, Database accession no. NLM2241569
- ARCHIV FÜR TIERERNÄHRUNG 1990 MAY-JUN, vol. 40, no. 5-6, May 1990 (1990-05-01), pages 431 - 442, ISSN: 0003-942X

## Description

### Technical field

This invention relates to energy redistribution in animals by pectins with a specific degree of esterification. This energy redistribution is explained by a modified feed intake pattern due to the presence of pectins with a specific degree of esterification in the feed. This feed intake pattern is characterised by first latency to feed intake (delayed first meal), smaller meals, but more frequent meals. As a result, the total feed intake in the animal life is not affected, only the feed intake pattern is improved.

### Background of the invention

Improvement of feed efficiency towards lean meat is mandatory to ensure the worldwide demand for healthy animal derived food, such as meat. To achieve that goal the world is depending upon new technologies in intensive animal food production. In this context, the production rate in animals and more particularly lean meat quality is becoming increasingly important for animal (and subsequently human) health. In addition, the rising incidence of obesity among populations in industrialized areas has fueled the demand for a different feeding pattern (behavior as well as type of food products, such as meat with a lower fat content). This way, using functional carbohydrates to influence feeding behavior and/or fat deposition in livestock animals and - both indirectly and directly - in humans, will be an important tool to tackle the obesity problems in the human population.

Carbohydrates have been shown to be an essential feed ingredient in regulation hunger and satiety. Several disclosures relate to treating obesity or reducing hunger in humans or animals. US20070275118 discloses a fiber composition aimed at promoting weight loss in humans. WO2010/115890 describes a pectin-containing beverage with a satiety-enhancing effect in humans. EP1410722 relates to a weight-loss kit comprising digestible carbohydrates. EP1588629 discusses a pectin-based composition for the treatment or prevention of obesity. Kirstyn Logan et al. (2015) investigates the role of different pectin fibers in promoting human satiety. Drochner et al. (1990) and Langhout et al. (1996) examine the use of pectins in poultry feed and report adverse effects, including reduced body weight. JP2011055747 discloses the use of pectins in combination with a calcium salt to suppress the absorption of mycotoxins in the bodies of animals.

Pectin is a known carbohydrate widely used in food applications. WO2014/005853 and WO97/49298 describe pectin compositions intended for gelling applications, such as in soups and other food preparations. WO2010/129153 relates to the use of pectin in fermented milk products, while US2008/166465 discloses its application in the preparation of bakery jams.

The current invention aimed to identify specific carbohydrates, which are regulating satiety processes and have at the same time beneficial effects on the energy balance of animals, as an important health parameter. This target will become increasingly more important in animal health care.

### Summary of the invention

The current invention aims to provide a method of modifying the feed intake pattern in pigs, comprising feeding said pigs a feed formulation comprising one or more pectins, wherein said one or more pectins are present in the feed formulation between 0.01 and 5 wt% based on the total weight of the feed formulation, said one or more pectins having an esterification degree less than 50%, wherein said feed intake pattern is modified by consuming subsequently smaller but more frequent meals, thereby not affecting the total feed intake which provides an improved intake pattern, thereby resulting in a repartitioning of energy.

### Figures

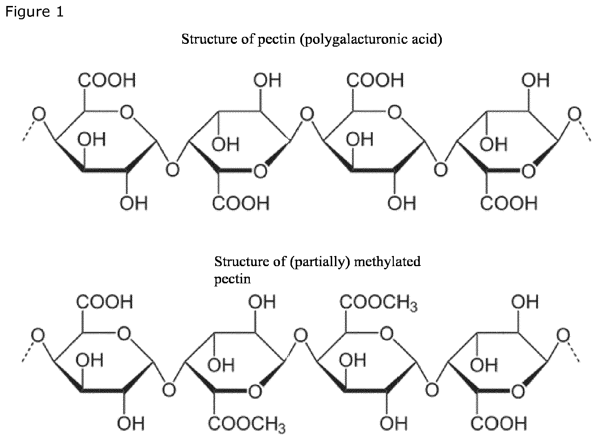

Figure 1 shows parts of the structure of pectin as well as (partially) esterified pectin.

### Description of invention

Pectins are found in the primary cell wall and middle lamella of the plant tissues as complex polymers of α-D-(1→4) galacturonic acid (McCready, 1970). They contribute to many functions in plants, affecting cell size and shape, tissue resistance, ion transport, water holding capacity, defence against pathogens and wounding (Voragen *et al.,* 2001). At various stages of maturity of the plant the pectins are partially in the methyl ester form and may contain some acetyl groups (Jeraci and Lewis, 1989). However, in most research today, pectins are not further characterized, and observed effects cannot be attributed to a specific (sub)structure of pectins. Although it is expected that different pectic fractions can markedly affect the chemico-physical and the biological properties of the dietary fibre (Voragen *et al.,* 2001; Bailoni et al. 2005), most research on nutritional effects of pectins lack structural research and therefore pectins are referred rather to antinutritional nutrients in feed, lowering overall feed intake resulting in lower animal performance.

Pectins are produced commercially as a white to light brown powder, mainly extracted from citrus fruits, and is used in food mainly as a gelling agent, particularly in jams and jellies. It is also used in fillings, medicines, sweets, as a stabilizer in fruit juices and milk drinks, and as a source of dietary fiber.

Figure 1 shows parts of the structure of pectin as well as (partially) esterified pectin. The formula shows that the esterification is a methoxylation, but also other alkyl groups can be used (such as acetyl). It is clear that a pectin can be esterified with one group only (such as CH3 or COCH3) or with more than one group in the same structure. Preferably the esterification type of the pectin is either methylation and/or acetylation, more preferably methylation.

As seen in figure 1, pectin is a complex polysaccharide composed of a α-1,4-linked D-galacturonic acid (GalA) backbone (the so-called homogalacturonan or smooth region) and segments consisting of alternating sequences of α-(1,2)-linked L-rhamnosyl and α-1,4-linked D-galacturonosyl residues ramified with side chains of arabinans, arabinogalactans and galactans (branched rhamnogalacturonans or hairy regions). Pectins are decorated with neutral sugars (NS), mainly being galactose, arabinose and rhamnose.

Commercial pectins usually contain low amounts of neutral sugar as a result of the acid extraction (the neutral sugar content is around 5%). Other structural elements of pectins are xylogalacturonan and rhamnogalacturonan II. Rhamnogalacturonan II is carrying peculiar sugar residues such as Api (D-apiose), AceA (3-C-carboxy-5-deoxy-L-xylose), Dha (2-keto-3-deoxy-D-lyxo-heptulosaric acid) and Kdo (2-keto-3-deoxy-D-manno-octulosonic acid). The relative proportions of these different structural elements may vary significantly for different plant origins and the various derived commercial products.

The various substituents of pectin can be esterified. The major types of esterification are: O-methyl, O-acetyl and O-feruloyl. Not excluding any other types of esterification. Most of the esterifications reside in the homogalacturonan region on the GalA residues. The GalA residues can be thus present as free carboxyl groups or as esterified. Esterification can occur as mono-esterification, but also as double or even a triple esterification of single residues. The esterification on a single residue can be through a single type of alkyl group (i.e. methyl or acetyl), but is can also be a mixed type. Thus, GalA can also be acetylated (for example on the C-2 and/or C-3 position), which occurs as such in sugar beet and potato tuber pectins.

The degree of esterification (DE) is by definition the amount of esters (in moles) present per 100 moles of total galacturonic acids (free GalA and substituted GalA summed together). As most commercial pectins are essentially having esterifications of the methyl-ester type, the DE is often expressed as the degree of methylation (DM).

In that case, the degree of esterification is by definition the amount of methyl-esters (in moles) present per 100 moles of total galacturonic acids (free GalA and substituted GalA summed together). In the case that the esterification is of the acetyl type, the DE is often expressed as the degree of acetylation (i.e. DA). In that case, the degree of esterification is by definition the amount of acetyl-esters (in moles) present per 100 moles of total galacturonic acids (free GalA and substituted GalA summed together). In the case of multiple types of esterification, the DE is often expressed split in a degree of methylation (i.e. DM) and a degree of acetylation (i.e. DA). These are calculated as described above. Alternatively, the DE can be expressed as the degree of esterification, defined the by amount of galacturonic acid residues modified with one or more esterifications (in moles) present per 100 moles of total galacturonic acids (free GalA and substituted GalA summed together).

Commercial pectins can be a mixture of several populations: the distribution of the substituents can differ in an intramolecular level (within one single pectin polymeric chain) or in an intermolecular level (within one single pectin sample). This holds for all substituents, thus the sugars as well as the esterifications, and therefore both categories are meant with the word 'substituents' in the following. The substituents can be distributed completely at random. This random distribution can follow an even distribution pattern, when the substituents are regularly distributed over a single pectin polymeric chain, leading to a more homogenous pectin polymeric chain. If all pectin polymeric chains in a single pectin sample are of the same homogenous type, also the sample can be called homogeneous.

However, a single homogenous pectin polymeric chain can be present in a composition with other homogenous pectin polymeric chains but having a different intramolecular (but still homogeneous) distribution of the substituents. In this case, the pectin sample should be considered heterogeneous.

This invention describes the surprising observation that supplying pectins with a specific range of esterification to pigs and rats, the objects consume same amounts of feed but by an improved intake pattern, characterised by smaller meals, but more frequent meals. This intake pattern lowers glucose and insulin levels in the blood and slows down gastric emptying. This finally results in a repartition of energy (fat tissue) improving the lean tissue composition. This mode of action of specific pectins is novel and not earlier described for animal and even human nutrition.

The degree of esterification in the context of the present invention is preferably determined by the HPLC method as described by Voragen at al. (2001), in the publication titled "Determination of the degree of methylation and acetylation of pectins by h.p.l.c,", published in Food Hydrocolloids vol. I no. I pp.65 -70. 1986. The term "animal" means an animal likely to develop or suffering energetic unbalances, including avian, bovine, canine, equine, galline, feline, hircine, lapine, murine, musteline, ovine, piscine, porcine and vulpine animals. Preferably, the animal is a porcine, galline, bovine, ovine, canine, feline.

In a first not claimed aspect, the current disclosure provides a composition comprising a carbohydrate, whereby said carbohydrate is pectin with a esterification degree less than 50%.

Preferably the esterification type of the pectin according to the current disclosure is either methylation and/or acetylation, more preferably methylation.

Said derivatives may include salts (pectinates or pectates) such as Ca2+, Na+ or K+ salts, modified citrus pectin (MCP) or amidated pectin whereby said at least part of the galacturonic acid is converted with ammonia to carboxylic acid amide, substitution (alkylation, amidation, quaternization, thiolation, sulfation, oxidation, etc.), chain elongation (cross-linking and grafting) and depolymerization (chemical, physical and enzymatic degradation). The presence of an amide group is typically at the C-6 position of the amidated GalA residues. However this does not exclude amide groups being present on of any of the other positions. If pectin is amidated, the DE is often expressed as the degree of amidation (i.e. DAM). In that case, the degree of esterification is by definition the amount of amides (in moles) present per 100 moles of total galacturonic acids (free GalA and substituted GalA summed together).

The following distinction is made among the esterified pectins:
(i) Low-esterified pectins (LEP)
(ii) High-esterified pectins (HEP).

Low-esterified pectins have a degree of esterification (DE) of less than 50%. This means that less than 50% of the possible positions are esterified.

High-esterified pectins have a DE of more than 50%. This means that more than 50% of the possible positions are esterified.

In a further aspect of the disclosure, said degree of esterificaton is preferably less than 45, more preferably less than 40%, 35%, 30%.

Usually the pectin has a DE of at least 1%, preferably of at least 2, more preferably of at least 3%.

In another aspect of the disclosure, said degree of esterification is preferably between 5 and 50%.

By preference, said pectin comprises one or more polymers of α-D-(1→4) galacturonic acid or mixtures of one or more of said polymers.

It was surprisingly found that the composition as described above has a positive effect on the energy redistribution in animals. This energy redistribution is explained by a modified feed intake pattern which on its turn is characterised by first latency to feed intake (delayed first meal), smaller meals, but more frequent meals. As a result, the total feed intake in the human or animal life is not affected, only the feed intake pattern is improved. Pectins with a specific degree of esterification according to the current invention act as specific carbohydrates on the mechanism of nutrient absorption in the intestinal tract of animals and humans.

The source of these pectins is not essential for the observed effect. In the context of the present the pectins can be obtained from any known sources. Pears, apples, guavas, quince, plums, gooseberries, oranges, and other citrus fruits contain large amounts of pectin, while soft fruits like cherries, grapes, and strawberries contain small amounts of pectin. Also other plant sources than fruits can comprise pectin. For example, pectin can be sourced from potato, soy, sugar beet, chicory, carrot, tomato, pea, parsnip, and (green) beans.

As mentioned, pectins are present in almost all higher plants. Several by-products of the food industries are used for their extraction, such as citrus peels (by-product of lemon juice production), apple pommace (by-product of apple juice manufacture), sugar beet (by-product of the beet-sugar industry) and in a minor extend potatoes fibres, sunflower heads (by-product of oil production) and onions. Note that this list is not exhaustive. The methods for obtaining pectins with specifc degree of esterification are well known in the art.

The composition according to the current disclosure may further comprise additional raw materials (additives) and/or growth-promoting substances. The additives are, in a preferred embodiment, selected from the group consisting of aroma's and plant extracts. In a further preferred embodiment, the growth-promoting components are selected from the group, consisting of antibiotics, vitamins, trace elements, probiotics, prebiotics, essential oils, enzymes, fatty acids, and (in)organic acids. Non-limiting examples of organic acids which can be used in an embodiment, comprise C1-C12 carboxylic acids, in particular unsubstituted carboxylic acids such as formic acid, acetic acid, propionic acid, butyric acid, valeric acid, medium chain fatty acids; and/or substituted carboxylic acids such as adipic acid, maleic acid, succinic acid, citric acid, fumaric acid, tartaric acid, lactic acid, gluconic acid, succinic acid and ascorbic acid, including cyclic carboxylic acids such as picolinic acid. The organic acids may contain one or more substituted or unsubstituted carboxylic acids, as well as mixtures thereof, as well as saturated, unsaturated, cyclic, and/or aliphatic carboxylic acids or mixtures thereof, as well as metal complexes and/or salts thereof, as well as racemic and/or enantiomeric forms thereof. Non-limiting examples of inorganic acids which can be used in an embodiment include strong acids in small amounts, such as perchloric acid (hydroperchloric acid), hydrogen iodide, hydrogen bromide (hydrobromic acid), hydrogen chloride (hydrochloric acid), sulfuric acid and nitric acid; as well as weak inorganic acids such as phosphoric acid, hydrofluoric acid, hypochlorous acid, and nitrous acid.

In one aspect of the disclosure, the pectins in the composition according to the disclosure are present in liquid or solid form. In a further aspect of the disclosure, the composition according to the disclosure as described herein is formulated as a liquid or a solid form. The term "solid form" means a powder in particular. The term "liquid form", in particular, means a solution in water or means a solution in oil. In particular, the composition is suitable for oral administration.

The composition is typically useful to be used as food or feed supplement. In one aspect of the disclosure, , the concentration of the pectin, as described herein, amounts at least 1, 5, 10, 15, 20, 25, 30, 35, 40, 45, 50, 55, 60, 65, 70, 75, 80, 85 , 90, 95, 99, 100 % by weight of the composition. In a further embodiment, the pectin, as described herein, amounts to (based on dry weight) between 1 g/100 g composition (1% by weight) and 100 g/100 g composition (100% by weight), preferably be-tween 50 g/100 g and 90 g/100 g composition (50-90% by weight), more preferably between 60 g/100g and 80 g/100g.

The composition typically relates to an animal feed comprising the composition as mentioned above. In another aspect of the disclosure, said pectins with a DE as described above are present in an amount of 0,01 to 5 wt% based on the total weight of the feed formulation.

In particular, the composition or feed as described above, are used for improving the feed intake pattern of animals, thereby redistributing the energy in animals. Such use is characterised by latency to feed intake (delayed first meal), smaller but more frequent meals. For the purpose of the current invention, the term 'energy' is to be understood as representing the fat tissue present in animals.

By using the composition or feed according to the disclosure, , less fat is deposited in the visceral tissue of the animal, improving the leanness of meat and other derived animal products such as eggs and/or milk.

Conclusive, the use of pectins with a degree of esterification less than 50 % contribute to a redistribution of energy in the body of the animal, by showing first latency to feed intake (delayed first meal), and consuming subsequently smaller meals, but at a more frequent rate. In order that the present invention may be more clearly understood, the preferred form will be described with reference to the following examples.

### Example 1: Incorporation of LM pectin in diets leads to more and smaller meals Rat feeding trial set-up

17 Male Wistar rats (weight ±320g; Harlan Netherlands BV, Horst, The Netherlands) were individually housed in TSE cages in a climate-controlled room (21C ± 1) under a 12 h :12 h light-dark cycle (lights on at 10:00 AM). These specialized cages were equipped with food weighing sensor for continuous registration of food intake for multiple days (TSE Systems GmbH, Bad Homburg, Germany) to monitor circadian feeding patterns, meal sizes and meal numbers. Circadian food intake patterns were calculated as an average of the last two consecutive days, the first day was used for adaptation. These plexiglass cages (40x23x15 cm) consist of a sensitive weight balanced food station (stainless steel food container for standard size food pellets).

Animals were maintained ad libitum on the diets. Water was available ad libitum throughout the study. Food intake and body weights were measured daily at 10 AM. For weighing a laboratory scale was used (sensitivity 0,1 gram). Experiments were approved by the Ethical Committee of Animal Experiments of the University of Groningen.

All animals were instrumented with chronic heart catheters bilaterally in the jugular vein allowing stress free blood sampling during an intravenous glucose tolerance test (IVGTT). Surgeries were carried out under general isoflurane (2%) anesthesia. Animals had at least 10 days to recover before the start of the experiments. Cannulas were checked every week for patency.

The full trial lasted 11 weeks:
- week1: meal pattern measurements (TSE)
- week3: Blood sampling during a single meal of 1,5 grams
- week4: meal pattern measurements (TSE)
- week6: Intravenous Glucose Tolerance Test
- week9: meal pattern measurements (TSE)
- week11: carcass analysis

### Diets

9 rats were fed with a control diet, while 8 rats were fed with pectin enriched diet. The composition of the diets was as follows: 95% chow RMH-B meal (obtained from Arie Blok, Woerden, the Netherlands) and 5% Pectin (see Pectin sources). The diets were prepared by mixing all components (including 0,25% TiO2 as marker) with water to 600 ml/kilo in an industrial mixer until a homogeneous mixture/dough was obtained. After 20 minutes of mixing, the diets were pelleted using a pelleting machine (diameter 1,0 cm). The obtained pellets were dried for 48 hours using compressed air at room temperature.

### Pectin sources

Pectin with a DE 33 were isolated from citrus and obtained from Herbstreith & Fox (Neuenbürg/Württingen, Germany).

### Feeding pattern analyses

During the second meal pattern measurements the animals were observed and measurements were performed for 48 hours. The obtained data was averaged over all animals fed on a certain diet and is presented in the table below. Statistical analyses were performed using student T test.

| | Control diet | Pectin DE 33 diet |
|---|---|---|
| Number of meals | 20.56 ± 0.84 | 23.25 ± 0.82 |
| Average meal size (g) | 1.99 ± 0.07 | 1.75 ± 0.11 |
| Average meal duration (min) | 8.22 ± 0.54 | 9.22 ± 0.25 |
| Average eating speed (g/min) | 0.32 ± 0.04 | 0.21 ± 0.01 |

Surprisingly, pectin fed animals consumed significantly more meals which are smaller in size. Still, the total amount eaten in the period for both diets is not significantly different (40.92 vs 40.69 grams).

### Example 2: Incorporation of LM pectin in diets leads to reduced fat deposition

The rat trial was as described in example 1. After sacrifice a carcass analysis was performed to determine the amount of fat. Liver, stomach, gut (ilium to rectum), spleen, kidneys were removed and weighed. Retroperitoneal and epididymis fat was weighed as well. The fat content from the skin, carcass and gut was determined using a petroleum based Soxlet fat extractor. Visceral fat here was defined as the total of intestinal fat, epididymal fat and retroperitoneal fat.

| | Control diet | | Pectin DE 33 diet | |
|---|---|---|---|---|
| | Grams (or g/g for the ratio) | Relative vs body weight (%) | Grams (or g/g for the ratio) | Relative vs body weight (%) |
| Total fat | 76.03 ± 3.26 | 19.5 | 67.74 ± 2.51 | 17.8 |
| Visceral fat | 21.66 ± 1.22 | 5.5 | 17.86 ± 1.21 | 4.7 |
| Gut fat | 4.46 ± 0.23 | 1.1 | 3.51 ± 0.31 | 0.9 |
| Ratio fat:lean mass | 0.54 ± 0.03 | n.a | 0.45 ± 0.03 | n.a. |

Surprisingly, pectin fed animals have a reduced absolute as well as relative percentage of fat. This is also visible for the amount and relative percentage of visceral and gut fat.

**Example 3:** Effect of Low- and High Esterified Pectins on overall feed intake in piglets.

Context of the example: Pectin with a DM value of 33% have been tested in young pigs and have shown to have beneficial effects on feed intake compared to DM>65.

During a 35-d experimental period 621 weaned piglets (7.4 kg bodyweight) were assigned to either 1) a control group 2) a diet containing 3% pectin 33% DM or 3) a diet containing 3% pectin >65% DM. Piglets were housed in weanling pig facilities in pens with 7- 9 piglets per pen resulting in 27 pens (replicates) per treatment. Per treatment 4 of these replicates were housed in pens equipped with IVOG^{®} feeding stations for weanling pigs to enable measurement of individual feed intake characteristics. Piglets were given ad libitum access to feed and water during the whole 35-d period.

| | Control | Pectin DE 33 | Pectin DE >65 | p-value |
|---|---|---|---|---|
| Feed intake | 455.58 a | 475.78 a | 407.13 b | <.001 |

Surprisingly, Low-esterified pectins (represented by pectin DE 33) maintain feed intake over the piglet growth time, while High-esterified pectins (represented by pectin DE >65) affects feed intake in a negative way.

### References

- JERACI, J. L. & LEWIS, B. A. (1989). Determination of soluble fibre components: (1-> 3; 1->4) -β-D-glucans and pectins. Anim. Feed Sci. Technol. 23:15-25.
- BAILONI, L., SCHIAVON, S., PAGNIN, G., TAGLIAPIETRA, F. & BONSEMBIANTE, M. (2005). Quanti-qualitative evaluation of pectins in the dietary fibre of 24 foods, Ital. J. Anim. Sci. 4: 49-58.
- MCCREADY, R. M. (1970). Pectin. In: JOSLYN, M.A. (ed.) Methods in food analysis: physical, chemical and instrumental method of analysis. Academic Press, New York, USA, 565-595.
- VORAGEN, A. G. J., BELDMAN, G. & SCHOLS, H. (2001). Chemistry and Enzymology of Pectins. In: MCCLEARY, R.M. & PROSKY, L. (eds.) Advanced dietary fibre technology. Blackwell Sci. Ltd., Oxford, UK, 379-398.

## Claims

1. A method of modifying the feed intake pattern in pigs, comprising feeding said pigs a feed formulation comprising one or more pectins, wherein said one or more pectins are present in the feed formulation between 0.01 and 5 wt% based on the total weight of the feed formulation, said one or more pectins having an esterification degree less than 50%, wherein said feed intake pattern is modified by consuming smaller but more frequent meals, thereby not affecting the total feed intake.

2. The method according to claim 1, **characterized in that** said one or more pectins comprise one or more polymers of α-D-(1→4) galacturonic acid or mixtures of one or more of said polymers.

3. The method according to any of the previous claims, wherein said pigs are weaned piglets, and wherein said feed formulation comprises 3% pectin with 33% degree of esterification.

## Patentansprüche

1. Ein Verfahren zum Modifizieren des Futteraufnahmemusters bei Schweinen, umfassend das Füttern der Schweine mit einer Futterformulierung, die ein oder mehrere Pektine umfasst, wobei das eine oder die mehreren Pektine in der Futterformulierung, bezogen auf das Gesamtgewicht der Futterformulierung, zwischen 0,01 und 5 Gew.-% vorhanden sind, wobei das eine oder die mehreren Pektine einen Veresterungsgrad von weniger als 50 % aufweisen, wobei das Futteraufnahmemuster durch das Verzehren kleinerer, aber häufigerer Mahlzeiten modifiziert wird, wodurch die Gesamtfutteraufnahme nicht beeinflusst wird.

2. Das Verfahren nach Anspruch 1, **dadurch gekennzeichnet, dass** das eine oder die mehreren Pektine ein oder mehrere Polymere von α-D-(1→4)-Galacturonsäure oder Mischungen aus einem oder mehreren der Polymere umfassen.

3. Das Verfahren nach einem der vorhergehenden Ansprüche, wobei die Schweine entwöhnte Ferkel sind und wobei die Futterformulierung 3 % Pektin mit einem Veresterungsgrad von 33% umfasst.

## Revendications

1. Procédé de modification du profil d'ingestion alimentaire chez les porcs, comprenant l'alimentation desdits porcs avec une formulation alimentaire comprenant une ou plusieurs pectines , dans laquelle ladite ou lesdites pectines sont présentes dans la formulation alimentaire entre 0,01 et 5% en poids sur la base du poids total de la formulation alimentaire, ladite ou lesdites pectines ayant un degré d'estérification inférieur à 50%, ledit profile d'apport alimentaire étant modifié en consommant des repas plus petits mais plus fréquents, n'affectant ainsi pas l'apport alimentaire total.

2. Procédé selon la revendication 1, **caractérisé en ce que** lesdites une ou plusieurs pectines comprennent un ou plusieurs polymères d' acide α-D-(1 **→** 4) galacturonique ou des mélanges d'un ou plusieurs desdits polymères.

3. Procédé selon l'une quelconque des revendications précédentes, dans lequel lesdits porcs sont des porcelets sevrés, et dans lequel ladite formulation alimentaire comprend 3% de pectine avec un degré d'estérification de 33%.
